# DEMANDE DE BREVET EUROPEEN

(11) **EP 2 348 607 A2**
(43) Date de publication de la demande: **27.07.2011**
(21) Numéro de dépôt: 11151471.7
(22) Date de dépôt: 20.01.2011
(51) Int. Cl.: H02J 9/00, H02J 7/34

(54) **Dispositif sans pile avec moyens de communication sans fil et procédé de gestion de l'alimentation en courant électrique de ces moyens de communication**

(30) Priorité: 21.01.2010 FR 1050390
(71) Demandeur: Distech Controls Sas, 69126 Brindas (FR)
(72) Inventeur: Rodrigues, Patrick, 69680, CHASSIEU (FR); Delhomme, Jéremy, 69007, LYON (FR)
(74) Mandataire: Myon, Gérard Jean-Pierre

(57) **Abrégé**

Ce dispositif sans pile (2) comprend un boîtier (4) à l'intérieur duquel est installé un circuit électronique (6) qui comprend des moyens de communication sans fil (14), un générateur de courant électrique (10), un premier condensateur (12) branché en parallèle aux bornes (10₁, 10₂) du générateur de courant (10) et un deuxième condensateur (22) alimenté par le générateur de courant (10). Ce dispositif comprend également des premiers moyens interrupteurs (16) montés sur une ligne (L₁) d'alimentation en courant des moyens de communication (14), des moyens (18) de commande des premiers moyens interrupteurs (16), en fonction de la tension (V₁₂) aux bornes du premier condensateur (12), des deuxièmes moyens (26) montés sur une ligne (L₃) d'alimentation électrique du deuxième condensateur (22) et commandant l'alimentation des moyens (28) de commande des deuxièmes moyens (26).

## Description

L'invention a trait à un dispositif sans pile comprenant des moyens de communication sans fil qui doivent être alimentés en courant électrique pour pouvoir fonctionner correctement. Un tel dispositif peut être utilisé dans une installation domotique, notamment en tant que télécommande permettant de contrôler le fonctionnement d'un volet roulant, d'un dispositif de chauffage ou d'éclairage, ou en tant que capteur, par exemple comme sonde de température ou détecteur d'ouverture.

Il est connu d'utiliser une cellule photovoltaïque pour alimenter en courant des composants électroniques. Dans le domaine de la bureautique, il est courant d'équiper une calculatrice d'une ou plusieurs cellules photovoltaïques qui permettent de se dispenser d'intégrer des piles à cette calculatrice. Une telle calculatrice ne peut fonctionner que si elle est disposée dans un environnement éclairé.

Or, dans le domaine de la domotique, des organes de télécommande ou des capteurs doivent pouvoir fonctionner de nuit. Dans ce cas, il est connu d'équiper un dispositif sans fil d'un condensateur de capacité relativement élevée, parfois dénommé « super-capacité », qui constitue une capacité de stockage d'énergie électrique générée par une cellule photovoltaïque. Il existe des télécommandes domestiques équipées de deux cellules photovoltaïques dont l'une charge une « super-capacité » et dont l'autre est utilisée pour produire une tension suffisamment élevée pour faire démarrer un micro-contrôleur appartenant aux moyens de communication sans fil.

En effet, un micro-contrôleur est un composant électronique qui sur-consomme du courant lorsqu'il n'est pas alimenté sous une tension suffisamment élevée. En d'autres termes, pour pouvoir démarrer, un micro-contrôleur doit être alimenté, au moins temporairement, avec une tension relativement élevée et un courant d'intensité relativement importante. D'autre part, lorsqu'il a démarré, un micro-contrôleur peut basculer en mode de veille où sa consommation en courant est réduite par rapport à sa consommation lorsqu'il fonctionne pour activer d'autres éléments des moyens de communication sans fil.

Si l'on branche un micro-contrôleur aux bornes d'un générateur, en parallèle avec une super-capacité, lorsque le générateur commence à produire de l'énergie électrique alors que la capacité n'est pas chargée, le micro-contrôleur qui n'a pas commencé à démarrer récupère toute cette énergie sans pouvoir lui-même démarrer, ni permettre la charge de la super-capacité. Ceci bloque indéfiniment le système.

C'est à ces inconvénients qu'entend plus particulièrement remédier l'invention en proposant un nouveau dispositif dans lequel l'alimentation en courant des moyens de communication sans fil peut être optimisée.

A cet effet, l'invention concerne un dispositif sans pile comprenant un boîtier à l'intérieur duquel est installé un circuit électronique qui comprend lui-même des moyens de communication sans fil, ainsi qu'un générateur de courant électrique. Ce dispositif est **caractérisé en ce qu**'il comprend :
- un premier condensateur branché en parallèle aux bornes du générateur de courant
- un deuxième condensateur alimenté par le générateur de courant
- des premiers moyens interrupteurs montés sur une ligne d'alimentation en courant des moyens de communication
- des moyens de commande de ces premiers moyens interrupteurs, en fonction de la tension aux bornes du premier condensateur
- des deuxièmes moyens montés sur une ligne d'alimentation électrique du deuxième condensateur et contrôlant l'alimentation en courant du deuxième condensateur et
- des moyens de commande des deuxièmes moyens.

Grâce à l'invention, les deux condensateurs peuvent être chargés par le même générateur et utilisés de façon différenciée, l'un d'entre eux afin de produire un courant avec une intensité et sous une tension suffisants pour faire démarrer un micro-contrôleur appartenant aux moyens de communication sans fil du dispositif sans pile, alors que le second condensateur peut être utilisé comme réserve d'électricité, une fois chargé, pour fournir du courant lorsque le générateur n'est pas actif. Les premiers et deuxièmes moyens permettent de connecter l'un ou l'autre des condensateurs, voire les deux à la fois, aux moyens de communication sans fil, en fonction des conditions de fonctionnement du dispositif.

Selon des aspects avantageux mais non obligatoires de l'invention, un tel dispositif peut incorporer une ou plusieurs des caractéristiques suivantes, prises dans toute combinaison techniquement admissible :
- Le premier condensateur a une capacité de valeur inférieure à celle de la capacité du deuxième condensateur. En particulier, on peut prévoir que le premier condensateur a une capacité dont la valeur est comprise entre 2000 et 4000 µF, de préférence de l'ordre de 3300 µF, alors que le deuxième condensateur a une capacité dont la valeur est comprise entre 0,1 et 0,3 F, de préférence de l'ordre de 0,2 F.
- Les premiers moyens et les deuxièmes moyens sont formés chacun par un transistor de type MOS ou bipolaire.
- Les moyens de commande des premiers moyens formant interrupteurs comprennent un détecteur de tension dont le seuil est ajusté en fonction de la tension de démarrage d'un micro-contrôleur appartenant aux moyens de communication sans fil.
- Les moyens de commande des deuxièmes moyens comprennent un diviseur de tension ou un régulateur à découpage.
- Le générateur de courant comprend au moins une cellule photovoltaïque, une éolienne, un élément à effet Peltier inverse, un élément piézo-électrique ou un élément inductif.

L'invention concerne également un procédé pouvant être mis en oeuvre avec le dispositif mentionné ci-dessus et, plus spécifiquement, un procédé de gestion de l'alimentation en courant électrique de moyens de communication sans fil d'un dispositif sans pile comprenant un générateur de courant, ce procédé comprenant des étapes consistant à :
a) charger un premier condensateur branché en parallèle aux bornes du générateur de courant, à partir de ce générateur ;
b) contrôler la tension aux bornes du premier condensateur ;
c) lorsque la tension aux bornes du premier condensateur est supérieure ou égale à une première valeur de seuil, alimenter en courant les moyens de communication sans fil, à partir du premier condensateur et du générateur de courant ;
d) basculer un micro-contrôleur faisant partie des moyens de communication sans fil et alimenté en courant en mode de veille, avec consommation électrique restreinte ;
e) charger un deuxième condensateur, à partir du générateur de courant - en contrôlant le courant de charge grâce à des moyens montés sur une ligne d'alimentation électrique de ce deuxième condensateur ; et
f) alimenter en courant les moyens de communication sans fil à partir du deuxième condensateur et/ou du générateur de courant, selon que le générateur de courant délivre ou non un courant suffisant pour alimenter ces moyens de communication.

De façon avantageuse, l'alimentation des moyens de communication sans fil de l'étape c) est interrompue lorsque la tension aux bornes du premier condensateur est inférieure à une deuxième valeur de seuil, strictement inférieure à la première valeur de seuil. On peut en outre prévoir que, lors de l'étape e), les moyens montés sur une ligne d'alimentation en courant électrique du deuxième condensateur sont progressivement fermés. Ceci permet de minimiser la chute de tension aux bornes du générateur de courant.

L'invention sera mieux comprise et d'autres avantages de celle-ci apparaîtront plus clairement à la lumière de la description qui va suivre de deux modes de réalisation d'un dispositif et d'un procédé conformes à son principe, donnée uniquement à titre d'exemple et faite en référence aux dessins annexés, dans lesquels :
- la figure 1 est un schéma de principe d'un dispositif conforme à un premier mode de réalisation de l'invention et
- la figure 2 est un schéma de principe d'un dispositif conforme à un deuxième mode de réalisation de l'invention.

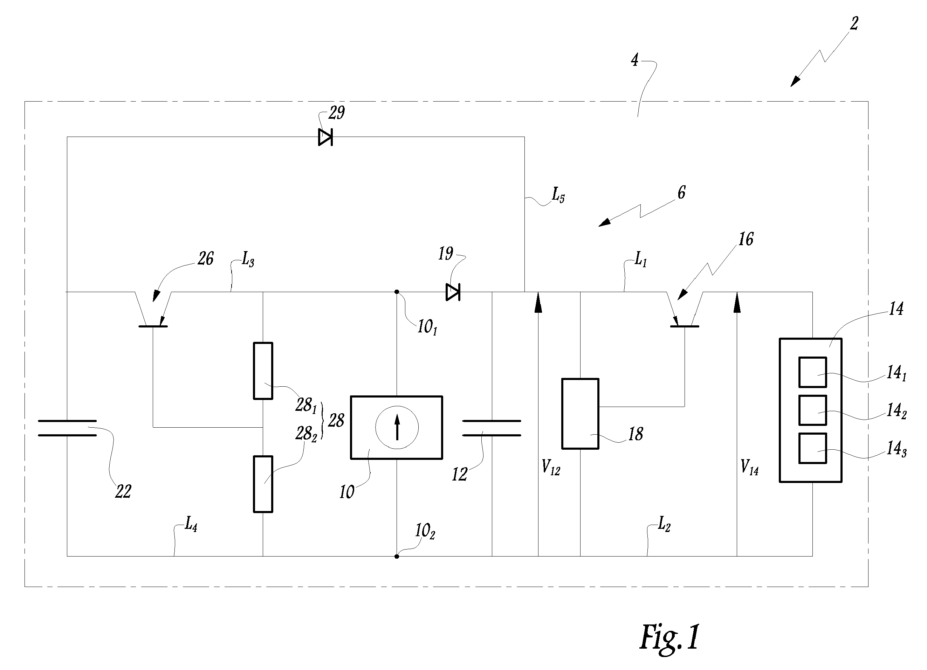

Le dispositif 2 partiellement représenté à la figure 1 est une télécommande faisant partie d'une installation domotique et qui permet de contrôler l'ouverture et la fermeture d'un volet roulant. Le dispositif 2 comprend un boîtier 4 à l'intérieur duquel est installé un circuit électronique 6. Le dispositif 2 comprend également des boutons de commande qui ne sont pas représentés pour la clarté du dessin.

Le circuit 6 comprend un générateur de courant 10 réalisé, dans l'exemple, sous la forme d'une cellule photovoltaïque. On note respectivement 10₁ et 10₂ les bornes de sortie et d'entrée du générateur 10.

On note L₁ une ligne électrique raccordée à la borne 10₁ et L₂ une autre ligne électrique raccordée à la borne 10₂.

Un premier condensateur 12 est branché entre les lignes L₁ et L₂, aux bornes du générateur 10.

Un ensemble 14 de communication sans fil est également branché entre les lignes L₁ et L₂. Cet ensemble 14 comprend un micro-contrôleur 14₁, une horloge 14₂ et un émetteur radio 14₃. D'autres composants non représentés peuvent appartenir à l'ensemble de communication 14.

Un interrupteur 16 est intercalé sur la ligne L₁ entre les éléments 12 et 14. Cet interrupteur est réalisé sous la forme d'un transistor MOS à faible courant de fuite. En variante, on peut utiliser un transistor bipolaire pour former l'interrupteur 16.

Un détecteur de tension 18 est monté entre les lignes L₁ et L₂, aux bornes du condensateur 12 dont il permet de détecter la tension de charge. Le détecteur 18 pilote le transistor 16.

On note V₁₂ la tension entre les bornes du condensateur 12 qui peut être considérée comme égale à la tension entre les lignes L₁ et L₂, sur la gauche de l'interrupteur 16 à la figure 1. On note V₁₄ la tension aux bornes de l'ensemble 14. Lorsque le transistor 16 est passant, les tensions V₁₂ et V₁₄ sont égales alors que, lorsque le transistor 16 est bloquant la tension V₁₄ est nulle.

On note V₀ la tension minimale d'alimentation de l'ensemble 14 pour que le micro-contrôleur 14₁ puisse fonctionner correctement et, en particulier, démarrer normalement. A titre d'exemple, on peut considérer que la tension V₀ est égale à 1,8 volt.

Le détecteur 18 est programmé pour piloter le transistor 16 à la fermeture lorsque la tension V₁₂ est supérieure à une valeur de seuil V₁ supérieure ou égale à V₀, par exemple égale à 2 volts, et à piloter le transistor 16 à l'ouverture lorsque la tension V₁₂ est strictement inférieure à une deuxième valeur de seuil V₂, par exemple égale à 1,8 volt. Le détecteur 18 pilote donc le transistor 16 avec une hystérésis égal à V₁ - V₂ = 0,2 volt.

Un deuxième condensateur 22 est monté entre deux lignes L₃ et L₄ qui sont respectivement raccordées aux bornes 10₁ et 10₂ du générateur 10. Ce condensateur 22 est donc alimenté en courant électrique par le générateur 10. Il a une capacité dont la valeur est sensiblement supérieure à la capacité du condensateur 12. En pratique, pour un circuit 6 dont la tension V₀ est égale à 1,8 volt, le condensateur 12 peut avoir une capacité dont la valeur est comprise entre 2000 et 4000 µF, de préférence de l'ordre de 3300 µF, alors que le condensateur 22 a une capacité dont la valeur est comprise entre 0,1 et 0,3 F, de préférence de l'ordre de 0,22 F.

Un second transistor 26 est monté sur la ligne L₃, entre le condensateur 22 et la borne 10₁ du générateur 10. Le transistor 26 est un transistor PNP à faible courant de fuite, fonctionnant à l'état bloqué puis à l'état linéaire. En variante, il peut s'agir d'un transistor NPN, le schéma électrique du circuit 6 étant alors adapté.

Par ailleurs, un pont diviseur de tension 28 branché entre les lignes L₃ et L₄ pilote le transistor 26 à l'ouverture ou à la fermeture, l'ouverture du transistor 26 pouvant être partielle. Le transistor 26 permet donc de contrôler l'alimentation du condensateur 22 en étant plus ou moins passant. Le pont diviseur 28 permet de fixer un seuil de fonctionnement à la fermeture progressive du transistor 26. Le pont diviseur 28 comprend deux résistances 28₁ et 28₂ dont les valeurs sont respectivement choisies égales à 5 MΩ et 15 MΩ, qui sont des valeurs relativement élevées afin de limiter les pertes de puissance dans le pont diviseur 28.

Une diode 19 est intégrée à la ligne L₁, entre la borne 10₁ et le condensateur 12. Cette diode permet la circulation de courant électrique du générateur 10 vers l'ensemble 14 et bloque la circulation de courant du condensateur 12 vers le générateur 10.

Par ailleurs, une ligne auxiliaire L₅ relie, en parallèle à la ligne L₁, une borne du condensateur 22 à la ligne L₁, au voisinage de la borne du condensateur 12 qui est y raccordé. La ligne L₅ est équipée d'une diode 29 qui est passante du condensateur 22 vers le condensateur 12 et bloquante dans l'autre sens.

Les éléments 10 à 29 appartiennent au circuit 6.

Le fonctionnement est le suivant : Au démarrage, les transistors 16 et 26 sont bloquants et le générateur 10 charge le condensateur 12 dont la tension augmente progressivement. Le fait que les transistors 16 et 26 sont bloquants évite une surconsommation intempestive de courant électrique du fait du micro-contrôleur 14₁ ou du condensateur 22. Lors de cette étape de démarrage, le détecteur 18 contrôle la tension V₁₂ et, lorsque cette tension atteint la valeur de seuil V₁, le détecteur 18 commande le transistor 16 formant interrupteur, ce qui permet d'alimenter l'ensemble de communication sans fil 14, et notamment le micro-contrôleur 14₁ avec une tension suffisante pour qu'il fonctionne correctement puisque V₁ est supérieure ou égale à V₀. Lors de cette étape, le micro-contrôleur est alimenté avec une tension supérieure ou égale à 1,8 volt et un courant d'intensité de 40 µA. Grâce à cette alimentation en courant électrique, le micro-contrôleur 14₁ « s'éveille » puis bascule en mode veille où sa consommation électrique est réduite. Une fois le micro-contrôleur 14₁ éveillé et basculé en mode veille, le courant consommé pour ce composant est réduit à 100 nA environ.

Le deuxième transistor 26 est alors fermé progressivement pour laisser passer le courant électrique provenant du générateur 10 à travers le condensateur 22 à travers la ligne L₃. Le diviseur de tension 28 est utilisé à cette occasion pour réguler le courant transitant dans le condensateur 22 et qui charge ce condensateur, de façon à empêcher l'écroulement de la tension de sortie du générateur 10. On régule ainsi la tension aux bornes de ce générateur de telle sorte que la chute de tension entre ces bornes demeure très faible, notamment inférieure à 200mV. De cette façon, le circuit 6 travaille dans une zone de fonctionnement optimale de la cellule photovoltaïque constituant le générateur 10, zone de fonctionnement dans laquelle le courant délivré par ce générateur est quasi constant. Grâce à la fermeture progressive du transistor 26, le condensateur 22 se charge progressivement.

La diode 29 évite un retour de courant intempestif du condensateur 12 ou du générateur 10 vers le condensateur 22 lorsque le transistor 26 est bloquant.

Lorsque le condensateur 22 est chargé, il constitue une « super-capacité » qui stocke de l'énergie électrique disponible pour les moyens de communication 14, en particulier lorsque le générateur ne fonctionne pas. Tel est le cas lorsque la cellule photovoltaïque est dans l'obscurité.

Ainsi, après le démarrage du micro-contrôleur 14₁ et la charge du condensateur 22, les moyens de communication sans fil sont alimentés en courant à partir du générateur 10 ou du condensateur 22, voire les deux à la fois, selon que le générateur 10 est actif ou non. En particulier, si le générateur ne peut pas délivrer une quantité de courant suffisante pour alimenter efficacement l'ensemble 14, le condensateur 22 est utilisé à cette fin.

Les moyens de commande 18 et 28 des transistors 16 et 26 sont autonomes et fonctionnent sans contrôle externe, sur la base de l'exploitation de la tension à leurs bornes, entre les lignes L₁ et L₂, d'une part, L₃ et L₄, d'autre part.

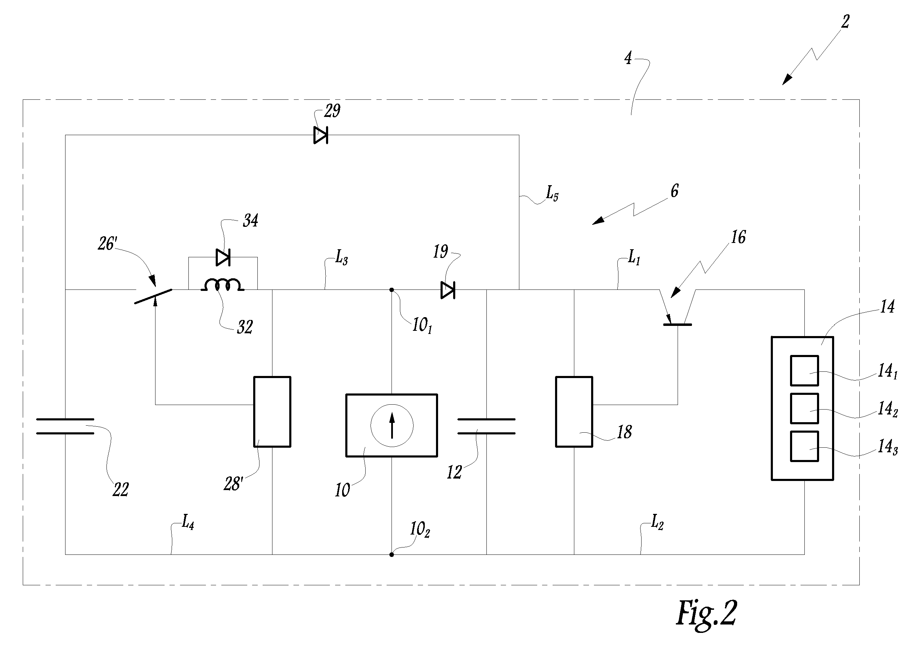

Dans le deuxième mode de réalisation représenté à la figure 2, les éléments analogues à ceux du premier mode de réalisation portent les mêmes références.

Le dispositif 2 de ce mode de réalisation fonctionne globalement comme celui de la figure 1. Il comprend un boîtier 4 dans lequel est disposé un circuit 6 équipé d'un générateur 10 formé par une cellule photovoltaïque et installé entre une première ligne électrique L₁ et une deuxième ligne électrique L₂. Un premier condensateur 12 est installé entre les lignes L₁ et L₂, aux bornes du générateur 10. Un ensemble 14 de communication sans fil, qui comprend entre autres un micro-contrôleur 14₁, est installé entre les lignes L₁ et L₂. Un premier interrupteur 16, installé sur la ligne L₁ entre les éléments 12 et 14, est commandé par un détecteur de tension 18, alors qu'une diode 19 est installée sur la ligne L₁, entre la borne de sortie 10₁ du générateur 10 et l'une des bornes du condensateur 12.

Un deuxième condensateur 22 est branché entre les lignes L₃ et L₄ respectivement raccordées aux bornes de sortie 10₁ et d'entrée 10₂ du générateur 10. Un interrupteur 26', installé sur la ligne L₃ entre les éléments 10 et 22, est commandé par un régulateur à découpage 28' qui fonctionne en tenant compte de la tension qu'il détecte entre les lignes L₃ et L₄. Une inductance 32 et une diode 34 permettent de lisser les fluctuations de courant en amont de l'interrupteur 26'.

Une autre diode 29 est prévue sur une ligne auxiliaire L₅ qui relie l'une des bornes du condensateur 22 à la ligne L₁, comme dans le premier mode de réalisation.

Les éléments 10 à 34 appartiennent au circuit 6.

Le fonctionnement de ce mode de réalisation est analogue à celui du premier mode de réalisation, l'interrupteur 26' et le régulateur à découpage 28' étant utilisés pour contrôler l'alimentation en courant du condensateur 22 et le charger progressivement.

Les capacités des condensateurs 12 et 22 peuvent avoir les mêmes valeurs que dans le premier mode de réalisation.

Dans les deux modes de réalisation, le détecteur de tension 18 peut être réalisé sous la forme d'un dispositif dit « LVD » (Low Voltage Detector) qui est actif à l'état bas et met l'alimentation du micro-contrôleur 14₁ à la masse, tant que la tension V₁ de passage de l'interrupteur 16 à l'état fermé n'est pas atteinte. La fonction du détecteur de tension 18 peut également être réalisée avec plusieurs transistors CMOS qui permettent de réaliser un hystérésis, avec deux seuils de commutation V₁ et V₂, comme envisagé ci-dessus. On peut également utiliser un simple comparateur à hystérésis.

En variante aux modes de réalisation décrits, un transistor PMOS peut être utilisé comme deuxième moyen 26 contrôlant l'alimentation en courant du deuxième condensateur 22. Un tel transistor dissipe moins d'énergie qu'un transistor bipolaire et il peut être commandé en tension. Le seuil de commutation à l'état linéaire de ce transistor peut être fixé en tenant compte de sa caractéristique VGS.

Selon une autre approche, on peut utiliser un montage de type « Buck », c'est-à-dire un montage abaisseur de tension qui permet d'obtenir une régulation des variations du courant fourni au deuxième condensateur 22 en minimisant les pertes dues à cette baisse de tension. Dans ce cas, on utilise préférentiellement des moyens de contrôle de l'alimentation du deuxième contrôleur tels que ceux représentés à la figure 2. Ceci permet d'augmenter significativement le rendement de ces moyens de contrôle 26' - 28' - 32 - 34 et du dispositif 2.

L'invention a été décrite ci-dessus dans le cas où le générateur de courant 10 comprend une cellule photovoltaïque. En pratique, le générateur de courant peut fonctionner sur la base de phénomènes physiques autres qu'un rayonnement lumineux, par exemple au vent, auquel cas le générateur 10 comprend une éolienne. En variante, le générateur peut comprendre un élément à effet Peltier, un élément piézo-électrique ou un élément inductif. De façon générale, le générateur 10 est apte à délivrer un courant électrique en exploitant un phénomène naturel externe tel que la lumière, le vent, etc...

Quel que soit le mode de réalisation ou la variante considéré, le circuit 6 comprend trois sous-systèmes, à savoir :
- le générateur 10 qui alimente normalement l'ensemble de communication 14,
- le sous-système formé des éléments 12, 16 et 18, qui permet d'alimenter l'ensemble de communication 14 lors d'une phase de démarrage, en même temps que le générateur 10, jusqu'à ce que le micro-contrôleur 14₁ bascule en mode veille, et
- un deuxième sous-système constitué des éléments 22, 26 et 28 qui permet d'alimenter l'ensemble de communication sans fil 14 lorsque le générateur 10 n'est pas actif, après que le micro-contrôleur a basculé en mode veille.

L'invention permet au dispositif 2 de fonctionner de façon autonome, sans pile, en prélevant l'énergie nécessaire au fonctionnement de l'ensemble de communication 14 dans son environnement, grâce au générateur 10, et en stockant l'énergie disponible dans le deuxième condensateur 22 qui peut être qualifié de « super-capacité ».

En pratique, quel que soit le mode de réalisation, les valeurs des grandeurs caractéristiques des composants électroniques utilisés, 12, 22, 28₁, 28₂, 32 ou 34 et les tensions d'alimentation sont choisies pour que le dispositif 2 démarre avec une vitesse correcte, par exemple en moins de 10 mn, et pour que l'énergie stockée dans le condensateur 22 soit suffisante pour permettre à l'ensemble 14 d'assurer des communications radio en conditions normales d'utilisation. Les valeurs numériques mentionnées ci-dessus sont des exemples. D'autres ensembles de valeurs permettent de mettre en oeuvre l'invention.

L'invention peut être utilisée avec tout dispositif sans pile comprenant des moyens de communication sans fil, notamment un dispositif intégré à une installation domotique, telle qu'une télécommande permettant de contrôler un volet, un dispositif de chauffage ou une lampe d'éclairage, ou un capteur comprenant une sonde de température ou un détecteur d'ouverture.

Les caractéristiques des modes de réalisation décrits peuvent être combinées.

## Revendications

1. Dispositif (2) sans pile comprenant un boîtier (4) à l'intérieur duquel est installé un circuit électronique (6) qui comprend des moyens de communication sans fil (14) et un générateur de courant électrique (10) **caractérisé en ce qu**'il comprend :
- un premier condensateur (12) branché en parallèle aux bornes (10₁, 10₂) du générateur de courant (10) ;
- un deuxième condensateur (22) alimenté par le générateur de courant ;
- des premiers moyens formant interrupteurs (16) et montés sur une ligne (L₁) d'alimentation en courant des moyens de communication (14) ;
- des moyens (18) de commande des premiers moyens interrupteurs, en fonction de la tension (V₁₂) aux bornes du premier condensateur ;
- des deuxièmes moyens (26 ; 26') montés sur une ligne (L₃) d'alimentation électrique du deuxième condensateur et contrôlant l'alimentation en courant du deuxième condensateur (22) ; et
- des moyens (28 ; 28') de commande des deuxièmes moyens.

2. Dispositif selon la revendication 1, **caractérisé en ce que** le premier condensateur (12) a une capacité de valeur inférieure à la valeur de la capacité du deuxième condensateur (22).

3. Dispositif selon la revendication 2, **caractérisé en ce que** le premier condensateur (12) a une capacité dont la valeur est comprise entre 2000 et 4000 µF, de préférence de l'ordre de 3300 µF, alors que le deuxième condensateur (22) a une capacité comprise entre 0,1 et 0,3 F, de préférence de l'ordre de 0,22 F.

4. Dispositif selon l'une des revendications précédentes, **caractérisé en ce que** les premiers moyens (16) et les deuxièmes moyens (26 ; 26') sont formés chacun par un transistor de type MOS ou bipolaire.

5. Dispositif selon l'une des revendications précédentes, **caractérisé en ce que** les moyens de commande des premiers moyens formant interrupteurs (16) comprennent un détecteur de tension (18) dont le seuil est ajusté en fonction de la tension de démarrage d'un micro-contrôleur (14₁) appartenant aux moyens de communication sans fil (14).

6. Dispositif selon l'une des revendications précédentes, **caractérisé en ce que** les moyens de commande des deuxièmes moyens (26 ; 26') comprennent un diviseur de tension (28) ou un régulateur à découpage (28').

7. Dispositif selon l'une des revendications précédentes, caractérisé en que le générateur de courant (10) comprend au moins une cellule photovoltaïque, une éolienne, un élément à effet Peltier inversé, un élément piézo-électrique ou un élément inductif.

8. Procédé de gestion de l'alimentation en courant électrique de moyens de communication sans fil (14) d'un dispositif (2) sans pile comprenant un générateur de courant (10), **caractérisé en ce qu**'il comprend des étapes consistant à :
a) charger un premier condensateur (12) branché en parallèle aux bornes (10₁, 10₂) du générateur de courant, à partir de ce générateur ;
b) contrôler la tension (V₁₂) aux bornes du premier condensateur ;
c) lorsque la tension aux bornes du premier condensateur est supérieure ou égale à une première valeur de seuil (V₁), alimenter en courant les moyens de communication sans fil (14), à partir du premier condensateur et du générateur de courant ;
d) basculer un micro-contrôleur (14₁), faisant partie des moyens de communication sans fil et alimenté en courant, en mode de veille, avec consommation électrique restreinte ;
e) charger un deuxième condensateur (22) alimenté, à partir du générateur de courant (10) en contrôlant le courant de charge grâce à des moyens (26 ; 26') montés sur une ligne (L₃) d'alimentation électrique du deuxième condensateur (22) ; et
f) alimenter en courant les moyens de communication sans fil (14) à partir du deuxième condensateur (22) et/ou du générateur de courant (10), selon que le générateur de courant (10) délivre ou non un courant suffisant pour alimenter les moyens de communication (14).

9. Procédé selon la revendication 8, **caractérisé en ce que** l'alimentation des moyens de communication sans fil (14) de l'étape c) est interrompue lorsque la tension aux bornes du premier condensateur est inférieure à une deuxième valeur de seuil (V₂), strictement inférieure à une première valeur de seuil.

10. Procédé selon l'une des revendications 8 ou 9, **caractérisé en ce que** lors de l'étape e), les moyens (26 ; 26') montés sur une ligne (L₃) d'alimentation en courant électrique du deuxième condensateur (22) sont progressivement fermés.
